# EUROPÄISCHE PATENTSCHRIFT

(11) **EP 0 723 752 B1**
(45) Veröffentlichungstag und Bekanntmachung des Hinweises auf die Patenterteilung: **10.03.1999**
(21) Anmeldenummer: 95120477.5
(22) Anmeldetag: 22.12.1995
(51) Int. Cl.: A47B 88/00

(54) **Verbindungsbeschlag zur Befestigung der Reling einer Schublade an einer Rück- oder einer Seitenwand der Schublade**
Connecting fitting to connect a drawer rail to a rear or side wall of a drawer
Ferrure de fixation d'une barrette de tiroir à une face arrière ou latérale d'un tiroir

(30) Priorität: 24.01.1995 AT 36/95 U
(43) Veröffentlichungstag der Anmeldung: 31.07.1996
(73) Patentinhaber: Julius Blum Gesellschaft m.b.H., 6973 Höchst (AT)
(72) Erfinder: Huber, Edgar, A-6971 Hard (AT)
(74) Vertreter: Torggler, Paul, Dr.

(56) Entgegenhaltungen:
- EP-A- 0 456 091

## Beschreibung

Die Erfindung bezieht sich auf einen Verbindungsbeschlag zur Befestigung der Reling einer Schublade an einer Rück- oder einer Seitenwand der Schublade mit einem an der Rück- oder der Seitenwand ausgebildeten oder befestigbaren, plattenförmigen stützteil, in dem das hintere Ende der Reling mit einem in die Reling einsteckbaren Befestigungsteil gehalten ist, wobei der Stützteil mit einem randoffenen Schlitz versehen ist, in den der Stützteil einhängbar ist.

Ein derartiger Verbindungsbeschlag ist aus der AT-PS 391 064 bekannt. Dabei ist in dem Befestigungsteil eine Schraube eingeschraubt, die durch den Schlitz im Stützteil ragt und mittels der der Befestigungsteil am Stützteil klemmbar ist.

Aufgabe der Erfindung ist es, einen derartigen Verbindungsbeschlag dahingehend zu verbessern, daß die Fixierung der Reling an der Rück- oder Seitenwand der Schublade schneller erfolgen kann als bei bekannten Beschlägen.

Die erfindungsgemäße Aufgabe wird dadurch gelöst, daß der Befestigungsteil einen federnden Haken aufweist, der hinter einer Kante des Stützteiles einrastet.

Ein Ausführungsbeispiel der Erfindung sieht vor, daß der Stützteil eine Öffnung aufweist, in die der Haken des Befestigungsteiles ragt.

Um eine besonders stabile Verankerung des Befestigungsteiles im Stützteil zu erreichen, ist vorteilhaft vorgesehen, daß der Befestigungsteil zwei Wangen aufweist, die beidseitig am Stützteil anliegen und einen dazwischenliegenden Kern, der in den Schlitz im Stützteil einschiebbar ist und der ein Widerlager für den Haken bildet.

Der Sitz des Befestigungsteiles im Stützteil kann auch noch dadurch verbessert werden, daß der Stützteil bei Schlitz mit einem vorspringenden Rand versehen ist, der bei montierter Reling in einer korrespondierenden Aussparung des Befestigungsteiles aufgenommen ist.

Nachfolgend werden zwei Ausführungsbeispiele der Erfindung anhand der Figuren der beiliegenden Zeichnungen eingehend beschrieben.
Die Fig. 1 zeigt ein Schaubild einer Schublade mit erfindungsgemäßen Verbindungsbeschlägen,

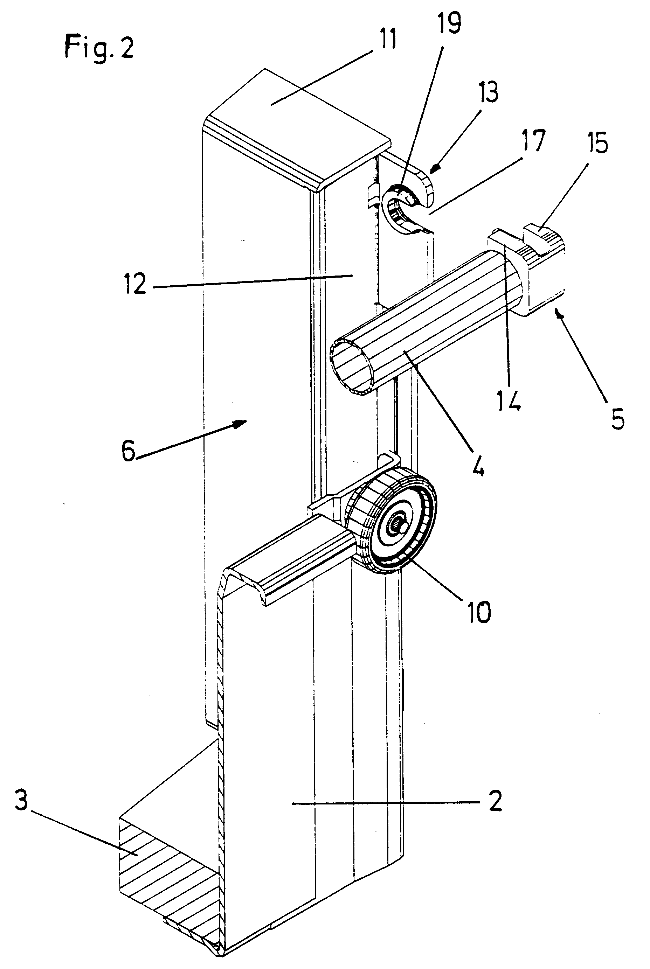

die Fig. 2 zeigt schaubildlich ein hinteres Eck der Schublade, wobei die Reling noch nicht in den Stützteil eingehängt ist,

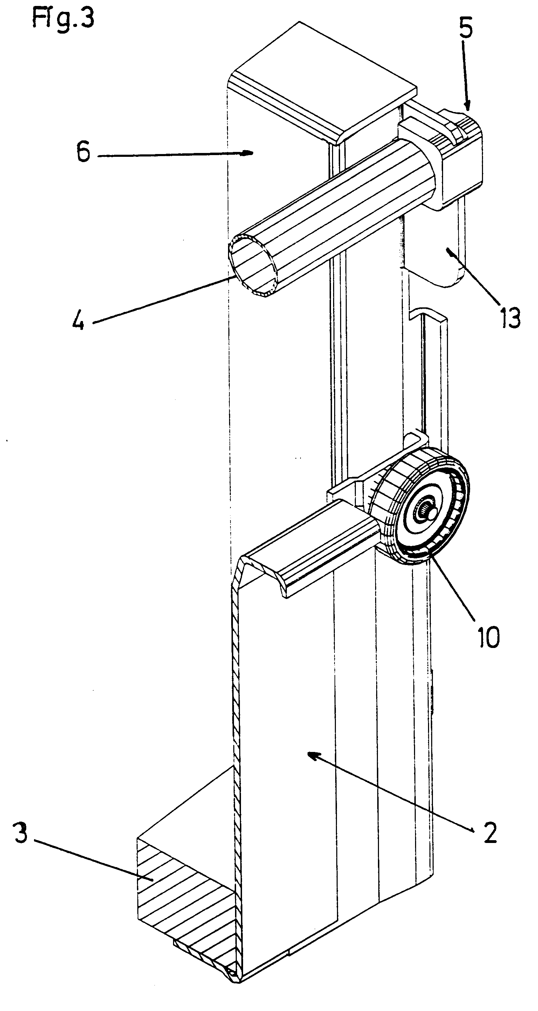

die Fig. 3 zeigt schaubildlich das hintere Eck einer Schublade, wobei die Reling mit dem Befestigungsteil im Stützteil verankert ist,

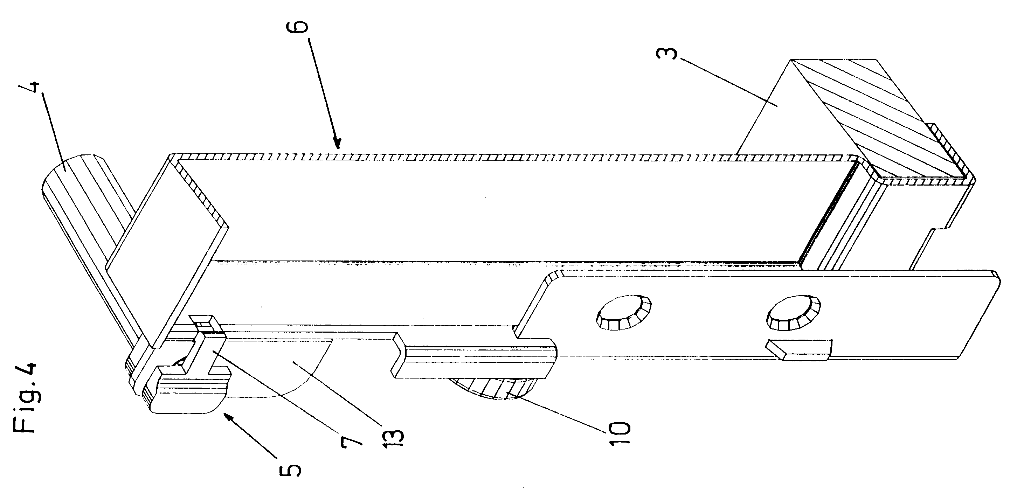

die Fig. 4 zeigt die Teile der Schublade der Fig. 3 von hinten gesehen,

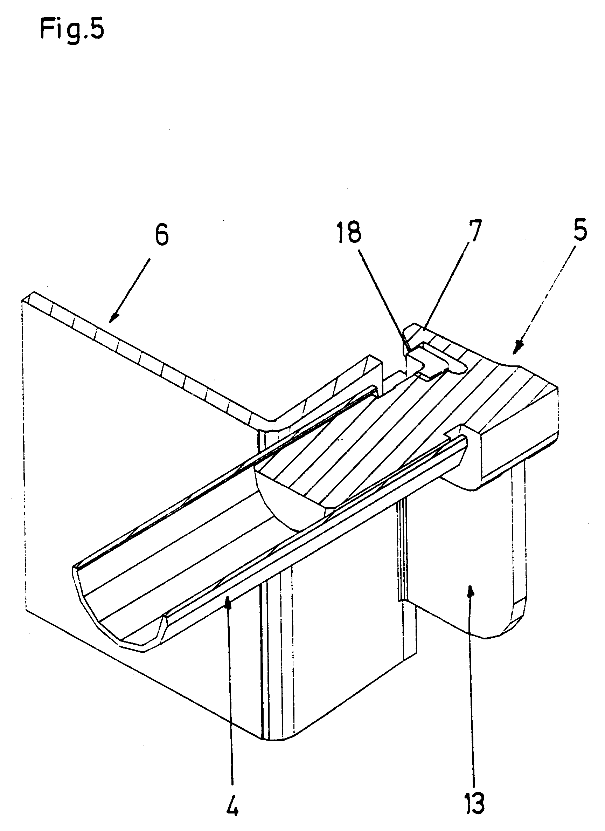

die Fig. 5 zeigt ein Schaubild des Befestigungsteiles, des Stützteiles, des hinteren Endes der Reling und einen Teil der Rückwand, wobei sämtliche Teile horizontal geschnitten sind,
die Fig. 6 zeigt ein weiteres Ausführungsbeispiel einer Schublade, und
die Fig. 7 bis 10 zeigen analoge Ansichten zu den Fig. 2 bis 5 gemäß diesem Ausführungsbeispiel der Erfindung.

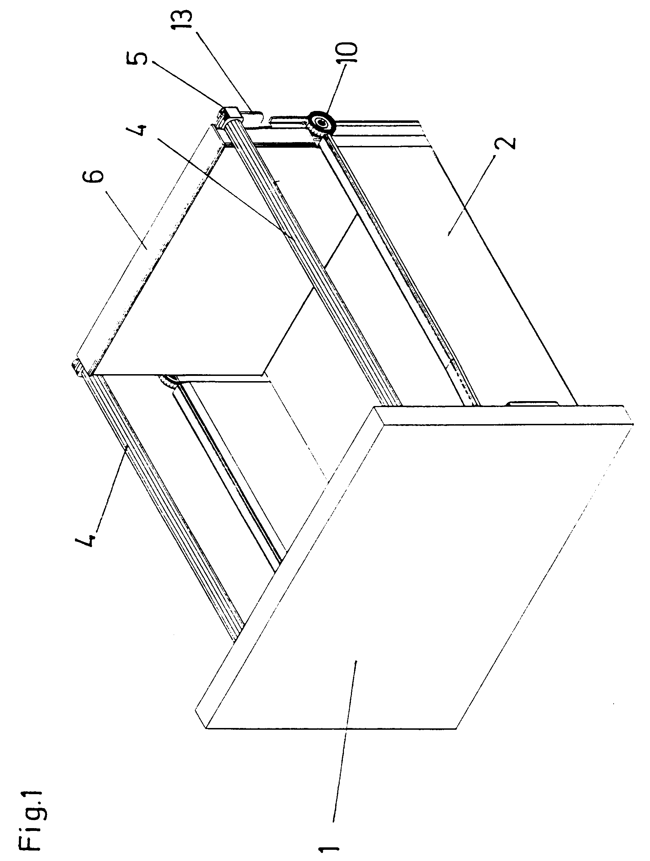

Die Schublade gemäß der Fig. 1 weist eine Frontblende 1, zwei Schubladenzargen 2, einen Schubladenboden 3 und eine Rückwand 6 auf. In diesem Ausführungsbeispiel ist die Rückwand 6 aus Stahlblech gefertigt. An den Schubladenzargen 2 lagern Laufrollen 10.

Die Rückwand 6 ist kastenförmig mit einem oberen Horizontalsteg 11 und seitlichen Vertikalstegen 12 nach außen ausgeführt.

An den seitlichen Vertikalstegen 12 sind die Stützteile 13 unmittelbar ausgebildet. Sie stehen im rechten Winkel von den Vertikalstegen 12 nach außen ab.

Die Reling 4 ist mit ihrem hinteren Ende am Stützteil 13 befestigt. In die Reling 4 ist ein Befestigungsteil 5 eingesteckt oder eingeschraubt. Der Befestigungsteil 5 ist vorzugsweise aus Kunststoff gefertigt. Er weist zwei Wangen 14, 15 auf, zwischen denen sich ein Kern 16 befindet, der in Montagelage in den offenen Schlitz 17 des Stützteiles 13 einschiebbar ist.

An der hinteren Wange 15 des Befestigungsteiles 5 ist ein Haken 7 ausgebildet, der in Montagelage bei einer hinteren Stirnkante 18 des Stützteiles 13 einrastet.

Beim Schlitz 17 ist der Stützteil 3 mit einem vorspringenden Rand 19 versehen, der bei montierter Reling 4 in einer korrespondierenden Aussparung der Wange 14 des Befestigungsteiles 5 einrastet.

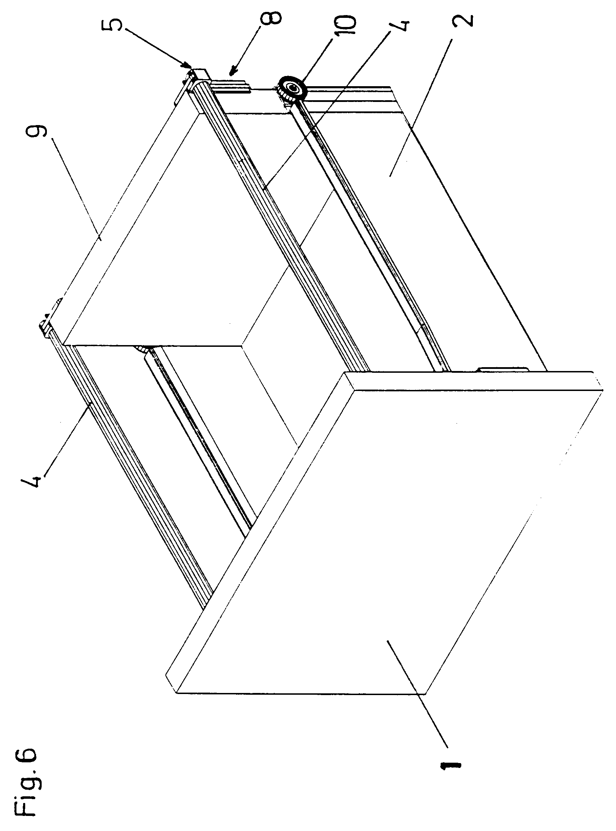

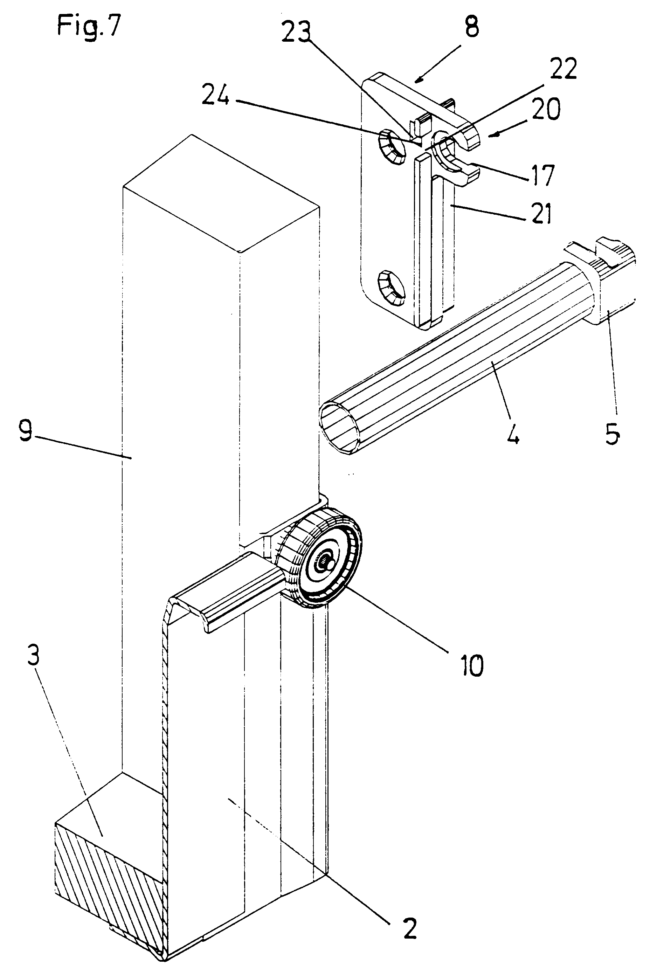

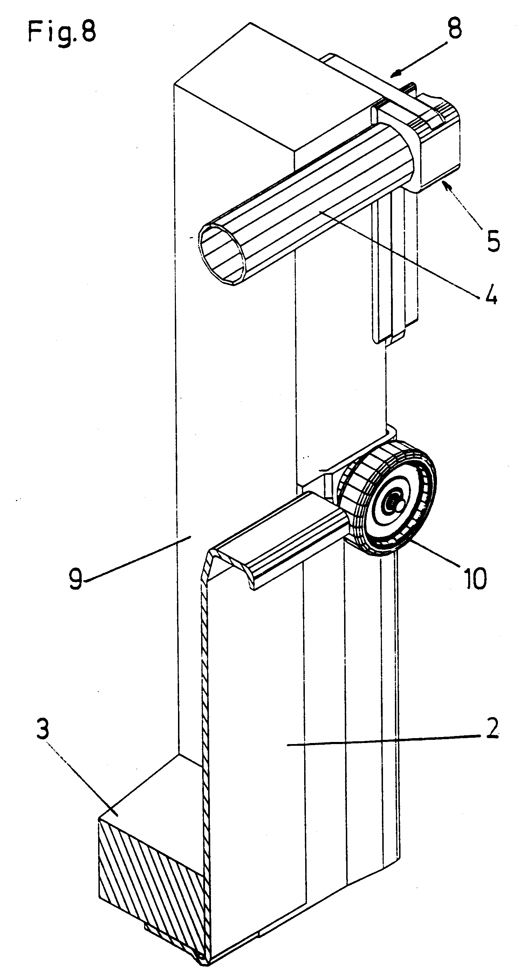

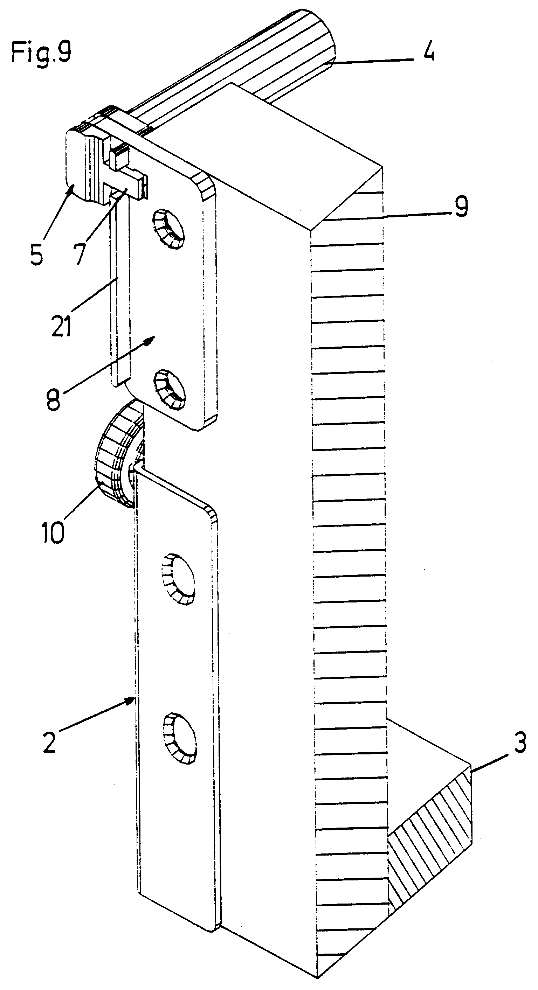

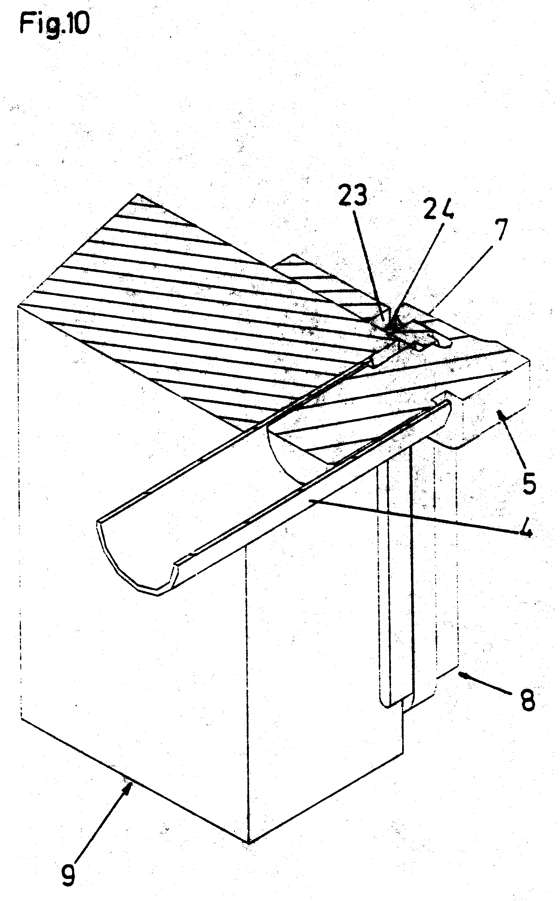

Im Ausführungsbeispiel nach den Fig. 6 bis 10 ist die Schublade mit einer Holzrückwand 9 versehen. An der Holzrückwand 9 sind separate Stützteile 8, vorzugsweise aus Kunststoffmaterial befestigt, beispielsweise mit der Rückwand 9 verschraubt.

Die Stützteile 8 weisen einen seitlich vorspringenden Flansch 20 auf, in dem sich der offene Schlitz 17 befindet.

In die Reling 4 ist wiederum ein Befestigungsteil 5 eingesteckt bzw. eingeschraubt, der gleich wie beim zuvor beschriebenen Ausführungsbeispiel ausgeführt ist.

Der Befestigungsteil 5 kann nun im Flansch 20 verankert werden, wobei der Kern 16 in den Schlitz 17 eingeschoben wird und die beiden Wangen 14, 15 beidseitig am Flansch 20 anliegen.

Der Stützteil 8 ist mit zwei seitlichen Stegen 21 versehen, die Ausnehmungen 22 aufweisen, durch die in Montagelage der Haken 7 des Befestigungsteiles 5 ragt.

Hinter den Stegen 21 ist im Stützteil 8 eine viereckige Öffnung 23 vorgesehen, an deren Vorderkante 24 der Haken 7 einrastet.

Bei beiden Ausführungsbeispielen kann bei der Montage der Schublade die Reling 4 an ihrem hinteren Ende durch einfaches Aufdrücken des Befestigungsteiles 5 auf den Stützteil 9, 13 verankert werden.

Die Befestigung der Reling 4 an der Frontblende 1 erfolgt in herkömmlicher Art und Weise.

## Patentansprüche

1. Verbindungsbeschlag zur Befestigung der Reling (4) einer Schublade an einer Rück- oder einer Seitenwand (6, 9) der Schublade mit einem an der Rück- oder der Seitenwand ausgebildeten oder befestigbaren, plattenförmigen Stützteil (8, 13), in dem das hintere Ende der Reling mit einem in die Reling einsteckbaren Befestigungsteil (5) gehalten ist, wobei der Stützteil mit einem randoffenen Schlitz (17) versehen ist, in den der Befestigungsteil einhängbar ist, dadurch gekennzeichnet, daß der Befestigungsteil (5) einen federnden Haken (7) aufweist, der hinter einer Kante (18, 24) des Stützteiles (8, 13) einrastet.

2. Verbindungsbeschlag nach Anspruch 1, dadurch gekennzeichnet, daß der Stützteil (8) eine Öffnung (23) aufweist, in die der Haken (7) des Befestigungsteiles (5) ragt.

3. Verbindungsbeschlag nach Anspruch 1, dadurch gekennzeichnet, daß der Befestigungsteil (5) zwei Wangen (14, 15) aufweist, die beidseitig am Stützteil (8, 13) anliegen und einen dazwischenliegenden Kern (16), der in den Schlitz (17) im Stützteil (8, 13) einschiebbar ist und der ein Widerlager für den Haken (7) bildet.

4. Verbindungsbeschlag nach einem der Ansprüche 1 bis 3, dadurch gekennzeichnet, daß der Stützteil (8, 13) beim Schlitz (17) mit einem vorspringenden Rand (19) versehen ist, der bei montierter Reling (4) in einer korrespondierenden Aussparung des Befestigungsteiles (5) aufgenommen ist.

5. Verbindungsbeschlag nach einem der Ansprüche 1 bis 4, dadurch gekennzeichnet, daß am Stützteil (8) ein vertikaler Steg (21) ausgebildet ist, der eine Ausnehmung (22) aufweist, durch die der Haken (7) ragt.

6. Verbindungsbeschlag nach einem der Ansprüche 1 bis 5, dadurch gekennzeichnet, daß sich der Haken (7) in der Längsrichtung des Schlitzes (17) erstreckt.

## Claims

1. A connecting brace for fixing the rail (4) of a drawer to a rear wall or a side wall (6, 9) of the drawer, having a plate-like supporting component (8, 13) which is constructed on or can be fixed to the rear wall or the side wall and in which the rear end of the rail is held with a fixing component (5) which can be pushed into the rail, the supporting component being provided with an open-edge slot (17) in which the fixing component can be hung, wherein the fixing component (5) has a sprung hook (7) which snaps in behind one edge (18, 24) of the supporting component (8, 13).

2. A connecting brace as claimed in Claim 1, wherein the supporting component (8) has an opening (23) into which the hook (7) of the fixing component (5) projects.

3. A connecting brace as claimed in Claim 1, wherein the fixing component (5) has two cheeks (14, 15), which lie against the supporting component (8, 13) on both sides, and a core (16) in between, which can be pushed into the slot (17) in the supporting component (8, 13) and forms an abutment for the hook (7).

4. A connecting brace as claimed in one of Claims 1 to 3, wherein the supporting component (8, 13) is provided, in the slot (17), with a projecting edge (19) which, when the rail (4) is assembled, is accommodated in a corresponding recess of the fixing component (5).

5. A connecting brace as claimed in one of Claims 1 to 4, wherein a vertical bar (21) which has a recess (22) through which the hook (7) projects is constructed on the supporting component (8).

6. A connecting brace as claimed in one of Claims 1 to 5, wherein the hook (7) extends in the longitudinal direction of the slot (17).

## Revendications

1. Armature de raccord pour la fixation de la tringle de soutien (4) d'un tiroir à une paroi arrière ou à une paroi latérale (6, 9) du tiroir comprenant une pièce d'appui (8, 13) en forme de plaque, conçue ou pouvant être fixée à la paroi arrière ou la paroi latérale, dans laquelle l'extrémité arrière de la tringle de soutien est maintenue avec une pièce de fixation (5) enfichable dans la tringle de soutien, la pièce d'appui étant dotée d'une fente ouverte de bord (17), dans laquelle la pièce de fixation peut être suspendue, caractérisée en ce que la pièce de fixation (5) présente un crochet à ressort (7), qui s'encliquette derrière une arête (18, 24) de la pièce d'appui (8, 13).

2. Armature de raccord selon la revendication 1, caractérisée en ce que la pièce d'appui (8) présente une ouverture (23), dans laquelle dépasse le crochet (7) de la pièce de fixation (5).

3. Armature de raccord selon la revendication 1, caractérisée en ce que la pièce de fixation (5) présente deux faces (14, 15), qui sont adjacentes des deux côtés à la pièce d'appui (8, 13), et un noyau (16) situé entre les deux, qui est enfichable dans la fente (17) située dans la pièce d'appui (8, 13) et qui forme une butée pour le crochet (7).

4. Armature de raccord selon l'une des revendications 1 à 3, caractérisée en ce que la pièce d'appui (8, 13) est dotée dans la fente (17) d'un bord faisant saille (19) qui, la tringle de soutien (4) étant montée, est logé dans un évidement correspondant de la pièce de fixation (5).

5. Armature de raccord selon l'une des revendications 1 à 4, caractérisée en ce que sur la pièce d'appui (8) est conçue une barrette verticale (21), qui présente un évidement (22), dans lequel dépasse le crochet (7).

6. Armature de raccord selon l'une des revendications 1 à 5, caractérisée en ce que le crochet (7) s'étend dans le sens longitudinal de la fente (17).
